# EUROPEAN PATENT APPLICATION

(11) **EP 3 617 847 A1**
(43) Date of publication of application: **04.03.2020**
(21) Application number: 18191361.7
(22) Date of filing: 29.08.2018
(51) Int. Cl.: G06F 3/01, G06F 3/038, G06F 3/048, H04L 12/28

(54) **CONTROLLING THE OPERATION OF ONE OR MORE DEVICES**

(71) Applicant: Koninklijke Philips N.V., 5656 AE Eindhoven (NL)
(72) Inventor: GEURTS, Lucas Jacobus Franciscus, 5656 AE Eindhoven (NL); TALGORN, Elise Claude Valentine, 5656 AE Eindhoven (NL); OUWERKERK, Martin, 5656 AE Eindhoven (NL); VAN GANSEWINKEL, Rob, 5656 AE Eindhoven (NL)
(74) Representative: de Haan, Poul Erik

(57) **Abstract**

There is provided an apparatus (100) for use with one or more devices (202, 208, 210). The apparatus (100) comprises a processor configured to acquire, from a physiological characteristic sensor (104), a physiological characteristic signal obtained from a user (204), analyze the acquired physiological characteristic signal to determine whether the physiological characteristic signal is indicative of a reaction of the user (204) to a stimulus rendered by a device (202), and control a manner in which one or more devices (202, 208, 210) operate based on whether the user (204) reacted to the stimulus rendered by the device (202).

## Description

### FIELD OF THE INVENTION

The disclosure relates to an apparatus and a method of operating the apparatus for use with one or more devices.

### BACKGROUND OF THE INVENTION

Devices (e.g. appliances in the home) can communicate complex information to a user via visual or audio feedback. If the user is facing a device, it is sufficient to display visual information on the device. If the user is not facing the device, it is better to use audio to convey information or to display the information elsewhere, e.g. a display on the wall that the user is facing or a smartwatch.

There are existing systems that can determine if a user is facing a device. These existing systems are based on the use of a camera. For example, a camera may be used to track an eye of a user to determine whether the user is looking at (a certain position) on a screen or to acquire images or a video of an environment to determine whether the user is facing a device based on body or facial recognition.

However, in order for these existing systems to operate reliably, it is necessary to install a camera in every device (e.g. every appliance in the home), which can be costly. It is also necessary to know the orientation of every device in order for the system to make an accurate determination as to whether the user is facing a device. As this is not always possible, the existing systems can be unreliable. The existing systems are also highly sensitive to environmental factors and thus they are less suitable in situations where environmental factors vary significantly. Another downside to the existing systems is that they do not work outdoors or outside of rooms that are equipped with the cameras. As such, existing systems lack flexibility.

### SUMMARY OF THE INVENTION

As noted above, a limitation with existing systems is that they lack flexibility, can be unreliable, are influenced by environmental factors, and are costly. It would thus be valuable to have an improvement aimed at addressing the existing problems.

Therefore, according to a first aspect, there is provided an apparatus for use with one or more devices. The apparatus comprises a processor configured to acquire, from a physiological characteristic sensor, a physiological characteristic signal obtained from a user and analyze the acquired physiological characteristic signal to determine whether the physiological characteristic signal is indicative of a reaction of the user to a stimulus rendered by a device. The processor is also configured to control a manner in which one or more devices operate based on whether the user reacted to the stimulus rendered by the device.

In some embodiments, the processor may be configured to, if the physiological characteristic signal is indicative of a reaction of the user to a stimulus rendered by a device, analyze the acquired physiological characteristic signal to determine an intensity of the stimulus. In some of these embodiments, the determined intensity of the stimulus may be indicative of a location of the device with respect to the user. In some embodiments, the higher the determined intensity of the stimulus, the closer the device may be to the user. In some embodiments, the lower the determined intensity of the stimulus, the further the device may be from the user.

In some embodiments, the processor may be configured to, if the physiological characteristic signal is indicative of a reaction of the user to a stimulus rendered by a device, analyze the acquired physiological characteristic signal to determine an intensity of the stimulus. In some of these embodiments, the determined intensity of the stimulus may be indicative of a distance of the user from the device.

In some embodiments, the stimulus rendered by the device may comprise a visual stimulus and the processor may be configured to analyze the acquired physiological characteristic signal to determine whether the user is facing or partially facing the device.

In some embodiments, the processor may be configured to, if the physiological characteristic signal is indicative of a reaction of the user to a stimulus rendered by a device, analyze the acquired physiological characteristic signal to determine a property of the stimulus. In some of these embodiments, the property of the stimulus may be indicative of a location of the user in an environment.

In some embodiments, the manner in which one or more devices operate may comprise a manner in which one or more devices render information.

In some embodiments, the stimulus rendered by the device may comprises a visual stimulus and the processor may be configured to, if the user reacted to the visual stimulus rendered by the device, control the device to render visual information and/or, if the user failed to react to the visual stimulus rendered by the device, control the device to render audio information, control one or more devices that the user is wearing or holding to render visual information, or control one or more devices in a field of view of the user to render visual information.

In some embodiments, the stimulus may be a subliminal stimulus. In some embodiments, a duration of the stimulus may be less than or equal to 10 ms. In some embodiments, the stimulus may be coded with an identity of the device.

According to a second aspect, there is provided a system the apparatus as described earlier and the device configured to render the stimulus.

In some embodiments, the device may be configured to transmit, to the physiological characteristic sensor, a request for the physiological characteristic sensor to obtain the physiological characteristic signal from the user prior to rendering the stimulus, at the same time as rendering the stimulus, or after rendering the stimulus.

According to a third aspect, there is provided a method of operating an apparatus for use with one or more devices. The method comprises acquiring, from a physiological characteristic sensor, a physiological characteristic signal obtained from a user and analyzing the acquired physiological characteristic signal to determine whether the physiological characteristic signal is indicative of a reaction of the user to a stimulus rendered by a device. The method also comprises controlling a manner in which one or more devices operate based on whether the user reacted to the stimulus rendered by the device.

According to a fourth aspect, there is provided a computer program product comprising a computer readable medium, the computer readable medium having computer readable code embodied therein, the computer readable code being configured such that, on execution by a suitable computer or processor, the computer or processor is caused to perform the method described above.

According to the aspects and embodiments described above, the limitations of existing techniques are addressed. In particular, according to the above-described aspects and embodiments, a more reliable and flexible apparatus, system, and method is provided by which it is possible to operate devices in a manner that is most appropriate for the user. Moreover, the apparatus, system, and method described above can be implemented irrespective of the location of the user, e.g. irrespective of whether the user is inside a building or outdoors. There is thus provided an improved apparatus, system, and method, which overcomes existing problems.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a block diagram of an apparatus according to an embodiment;
Fig. 2 is a block diagram of a system according to an embodiment;
Fig. 3 is flow chart illustrating a method according to an embodiment;
Figs. 4(a) and (b) illustrate example physiological characteristic signals according to an embodiment; and
Fig. 5 is flow chart illustrating a method according to another embodiment.

### DETAILED DESCRIPTION OF EMBODIMENTS

As noted above, there is provided herein an improved apparatus, system, and method, which overcomes existing problems.

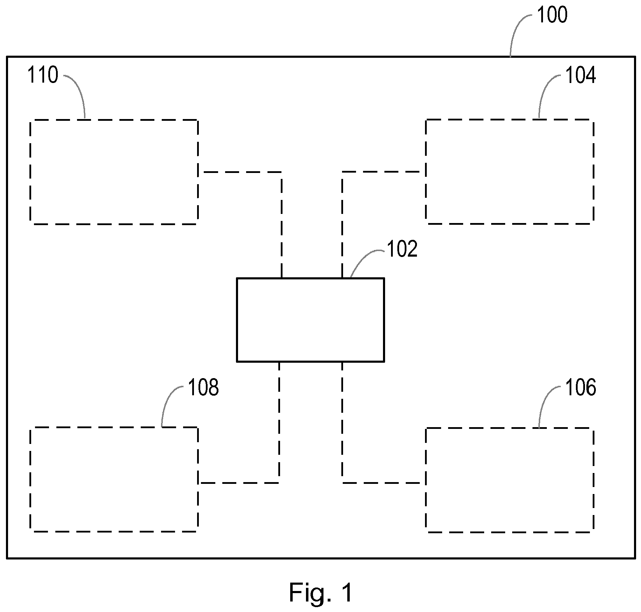

Fig. 1 illustrates an apparatus 100 for use with one or more devices according to an embodiment. In some embodiments, the apparatus 100 may be a device. For example, in some embodiments, the apparatus 100 may be a wearable device (e.g. a smart watch or any other wearable device) or a mobile device (e.g. a smart phone, a tablet, a laptop computer, or any other mobile device). In other embodiments, the apparatus 100 may be an apparatus that is dedicated for its purpose. Although examples for the form of the apparatus 100 have been provided, it will be understood that the apparatus 100 may take any other form.

As illustrated in Fig.1, the apparatus 100 comprises a processor 102. Briefly, the processor 102 of the apparatus 100 is configured to acquire, from a physiological characteristic sensor 104, a physiological characteristic signal obtained from a user and analyze the acquired physiological characteristic signal to determine whether the physiological characteristic signal is indicative of a reaction (or response) of the user to a stimulus rendered by a device. The processor 102 of the apparatus 100 is also configured to control a manner in which one or more devices operate based on whether the user reacted to the stimulus rendered by the device. The reaction of the user can also be referred to as the physiological reaction of the user.

The processor 102 of the apparatus 100 may comprise one or more processors. The one or more processors can be implemented in numerous ways, with software and/or hardware, to perform the various functions described herein. In some embodiments, each of the one or more processors can be configured to perform individual or multiple steps of the method described herein. In particular implementations, the one or more processors can comprise a plurality of software and/or hardware modules, each configured to perform, or that are for performing, individual or multiple steps of the method described herein. The one or more processors may comprise one or more microprocessors, one or more multi-core processors and/or one or more digital signal processors (DSPs), one or more processing units, and/or one or more controllers (such as one or more microcontrollers) that may be configured or programmed (e.g. using software or computer program code) to perform the various functions described herein. The one or more processors may be implemented as a combination of dedicated hardware (e.g. amplifiers, pre-amplifiers, analog-to-digital convertors (ADCs) and/or digital-to-analog convertors (DACs)) to perform some functions and one or more processors (e.g. one or more programmed microprocessors, DSPs and associated circuitry) to perform other functions.

As illustrated in Fig. 1, in some embodiments, the apparatus 100 may comprise the physiological characteristic sensor 104. However, it will be understood that, in other embodiments, the physiological characteristic sensor 104 may be external to (i.e. separate to or remote from) the apparatus 100. For example, in some embodiments, the physiological characteristic sensor 104 can be a separate entity or part of another apparatus (e.g. a device). The physiological characteristic sensor 104 is configured to obtain the physiological characteristic signal from the user. The physiological characteristic sensor 104 can thus be any sensor, or any combination of sensors, suitable for obtaining a physiological characteristic signal from a user.

In some embodiments, the physiological characteristic sensor 104 can comprise a contact physiological characteristic sensor and/or a non-contact physiological characteristic sensor. A non-contact physiological characteristic sensor can be any physiological characteristic sensor that is configured to be remote from (or at a distance from) the user, such that the physiological characteristic sensor 104 has no physical contact with the body of the user. A contact physiological characteristic sensor 104 can be any physiological characteristic sensor that is configured to be in physical contact with the body of the user. For example, the physiological characteristic sensor 104 may be configured to be worn (e.g. against the skin) on a part of the body of the user (e.g. on a finger, a wrist and/or any other part of the body of the user). In some of these embodiments, for example, a band configured to be worn around a part of the body of the user may comprise the physiological characteristic sensor 104 or the physiological characteristic sensor 104 may be placed under a band configured to be worn around a part of the body of the user. In some embodiments, a wearable device (e.g. a smart watch, a sensor patch, or any other wearable device) may comprise the physiological characteristic sensor 104.

A person skilled in the art will be aware of a variety of sensors that may be suitable for obtaining a physiological characteristic signal from the user. However, examples of the physiological characteristic sensor 104 may include, but are not limited to, a skin (e.g. skin conductance) response sensor, a heart rate sensor, a blood pressure sensor, a breathing (or respiration) rate sensor, a facial response sensor, a brain activity sensor, a muscle response sensor, or any other sensor, or any combination of sensors, suitable for obtaining a physiological characteristic signal from a user.

A skin response sensor may be any type of sensor, or any combination of sensors, suitable for obtaining a skin response (e.g. a skin conductivity) signal from the user. A person skilled in the art will be aware of a variety of sensors that may be suitable for obtaining a skin response signal from the user. However, examples of a skin response sensor may include, but are not limited to, a galvanic skin response (GSR) sensor, an optical skin response sensor (e.g. a camera or any other optical sensor), or any other skin response sensor, or any combination of skin response sensors.

A heart rate sensor may be any type of sensor, or any combination of sensors, suitable for obtaining a heart rate signal from the user. A person skilled in the art will be aware of a variety of sensors that may be suitable for obtaining a heart rate signal from the user. However, examples of a heart rate sensor may include, but are not limited to, an electrocardiogram (ECG) sensor, a photoplethysmography (PPG) sensor, a phonocardiography (PCG) sensor, an optical sensor (e.g. a camera), or any other heart rate sensor, or any combination of heart rate sensors.

A blood pressure sensor may be any type of sensor, or any combination of sensors, suitable for obtaining a blood pressure signal from the user. A person skilled in the art will be aware of a variety of sensors that may be suitable for obtaining a blood pressure signal from the user. However, examples of a blood pressure sensor may include, but are not limited to, an optical biometric sensor, an electrocardiogram (ECG) sensor, an impedance cardiogram sensor, a heart sound signal sensor, a radar signal sensor, or any other blood pressure sensor, or any combination of blood pressure sensors.

A breathing (or respiration) rate sensor may be any type of sensor, or any combination of sensors, suitable for obtaining a breathing rate signal from the user. A person skilled in the art will be aware of a variety of sensors that may be suitable for obtaining a breathing rate signal from the user. However, examples of a breathing rate sensor may include, but are not limited to, an electrocardiogram (ECG) sensor, a photoplethysmography (PPG) sensor, a camera (e.g. directed at the chest of the user), a motion sensor such as an accelerometer (e.g. worn on the chest of the user), or any other breathing rate sensor, or any combination of breathing rate sensors.

A facial response sensor may be any type of sensor, or any combination of sensors, suitable for obtaining a facial response signal from the user. A facial response signal can be any signal that is indicative of a facial response of the user. For example, a facial response signal can be a signal indicative of a facial expression of the user (e.g. blinking of the user, gaze direction of the user, or any other facial expression of the user), a pupil reaction of the user (e.g. a pupil diameter can reduce in size in response to a stimulus), or any other facial response of the user. A person skilled in the art will be aware of a variety of sensors that may be suitable for obtaining a facial response signal from the user. However, examples of a facial response sensor may include, but are not limited to, a motion sensor (e.g. to detect muscle movement from which facial expressions or micro facial expressions can be derived), an optical sensor (e.g. a camera), or any other facial response sensor, or any combination of facial response sensors.

A brain activity sensor may be any type of sensor, or any combination of sensors, suitable for obtaining a brain activity signal from the user. A person skilled in the art will be aware of a variety of sensors that may be suitable for obtaining a brain activity signal from the user. However, examples of a brain activity sensor may include, but are not limited to, an electroencephalogram (EEG) sensor, or any other brain activity sensor, or any combination of brain activity sensors.

A muscle response sensor may be any type of sensor, or any combination of sensors, suitable for obtaining a muscle response signal from the user. A person skilled in the art will be aware of a variety of sensors that may be suitable for obtaining a muscle response signal from the user. However, examples of a muscle response sensor may include, but are not limited to, an electromyography (EMG) sensor, or any other muscle response sensor, or any combination of muscle response sensors.

Although some examples have been provided for the type of physiological characteristic sensor 104, it will be understood that other types of physiological characteristic sensor 104, or combinations of physiological characteristic sensor 104, are also possible.

As illustrated in Fig. 1, in some embodiments, the apparatus 100 may comprise a communications interface (or communications circuitry) 106. Alternatively or in addition, the communications interface 106 may be external to (e.g. separate to or remote from) the apparatus 100. The communications interface 106 can be for enabling the apparatus 100, or components of the apparatus 100, to communicate with and/or connect to one or more other components, sensors, interfaces, devices, or memories (such as any of those described herein). For example, the communications interface 106 can be for enabling the processor 102 of the apparatus 100 to communicate with and/or connect to the physiological characteristic sensor 104 described earlier. The communications interface 106 may enable the apparatus 100, or components of the apparatus 100, to communicate and/or connect in any suitable way. For example, the communications interface 106 may enable the apparatus 100, or components of the apparatus 100, to communicate and/or connect wirelessly, via a wired connection, or via any other communication (or data transfer) mechanism. In some wireless embodiments, for example, the communications interface 106 may enable the apparatus 100, or components of the apparatus 100, to use radio frequency (RF), Bluetooth, or any other wireless communication technology to communicate and/or connect.

As illustrated in Fig. 1, in some embodiments, the apparatus 100 may comprise a memory 108. Alternatively or in addition, the memory 108 may be external to (e.g. separate to or remote from) the apparatus 100. The processor of the apparatus 100 may be configured to communicate with and/or connect to the memory 108. The memory 108 may comprise any type of non-transitory machine-readable medium, such as cache or system memory including volatile and non-volatile computer memory such as random access memory (RAM), static RAM (SRAM), dynamic RAM (DRAM), read-only memory (ROM), programmable ROM (PROM), erasable PROM (EPROM), and electrically erasable PROM (EEPROM). In some embodiments, the memory 108 can be configured to store program code that can be executed by the processor 102 to cause the apparatus 100 to operate in the manner described herein.

Alternatively or in addition, in some embodiments, the memory 108 can be configured to store information required by or resulting from the method described herein. For example, in some embodiments, the memory 108 may be configured to store any one or more of the acquired physiological characteristic signal obtained from the user, a result of the determination of whether the physiological characteristic signal is indicative of a reaction of the user to a stimulus rendered by a device, an indication of the manner in which one or more devices are controlled to operate, or any other information, or any combination of information, required by or resulting from the method described herein. In some embodiments, the processor 102 of the apparatus 100 can be configured to control the memory 108 to store information required by or resulting from the method described herein.

As illustrated in Fig. 1, in some embodiments, the apparatus 100 may comprise a user interface 110. Alternatively or in addition, the user interface 110 may be external to (e.g. separate to or remote from) the apparatus 100. The processor 102 of the apparatus 100 may be configured to communicate with and/or connect to a user interface 110. The user interface 110 can be configured to render (e.g. output, display, or provide) information required by or resulting from the method described herein. For example, in some embodiments, the user interface 110 may be configured to render (e.g. output, display, or provide) one or more of the stimulus, the acquired physiological characteristic signal obtained from the user, a result of the determination of whether the physiological characteristic signal is indicative of a reaction of the user to a stimulus rendered by a device, an indication of the manner in which one or more devices are controlled to operate, or any other information, or any combination of information, required by or resulting from the method described herein. Alternatively or in addition, the user interface 110 can be configured to receive a user input. For example, the user interface 110 may allow a user to manually enter information or instructions, interact with and/or control the apparatus 100. Thus, the user interface 110 may be any user interface that enables the rendering (or outputting, displaying, or providing) of information and, alternatively or in addition, enables a user to provide a user input. In some embodiments, the processor 102 of the apparatus 100 can be configured to control the user interface 110 to operate in the manner described herein.

For example, the user interface 110 may comprise one or more switches, one or more buttons, a keypad, a keyboard, a mouse, a touch screen or an application (e.g. on a smart device such as a tablet, a smartphone, or any other smart device), a display or display screen, a graphical user interface (GUI) such as a touch screen, or any other visual component, one or more speakers, one or more microphones or any other audio component, one or more lights (such as light emitting diode LED lights), a component for providing tactile or haptic feedback (such as a vibration function, or any other tactile feedback component), an augmented reality device (such as augmented reality glasses, or any other augmented reality device), a smart device (such as a smart mirror, a tablet, a smart phone, a smart watch, or any other smart device), or any other user interface, or combination of user interfaces. In some embodiments, the user interface that is controlled to render information may be the same user interface as that which enables the user to provide a user input.

Although not illustrated in Fig 1, the apparatus 100 may comprise a battery or other power supply for powering the apparatus 100 or means for connecting the apparatus 100 to a mains power supply. It will also be understood that the apparatus 100 may comprise any other component to those described herein or any combination of components.

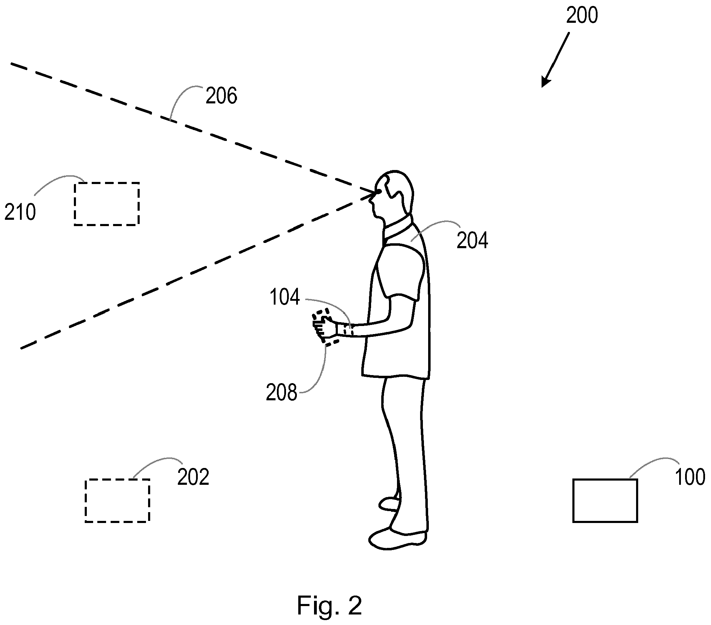

Fig. 2 illustrates a system 200 according to an embodiment. The system 200 comprises the apparatus 100 described earlier. In some embodiments, the system 200 may also comprise the device 202 that is configured to render the stimulus. The device 202 configured to render the stimulus may be any type of device. In some embodiments, for example, the device 202 configured to render the stimulus may be an appliance (e.g. a home appliance, such as a sound and/or television system, a kitchen appliance, a coffee machine, a washing machine, or any other type of appliance), a medical device, an automotive device, a security device, a signage device, or any other type of device. Although the apparatus 100 and the device 202 configured to render the stimulus are illustrated as being different (that is, separate from one another) in the embodiment illustrated in Fig. 2, it will be understood that the apparatus 100 may be the same device as that which is configured to render the stimulus according to other embodiments.

The stimulus referred to herein can be any stimulus suitable to cause a reaction of the user 204. For example, in some embodiments, the stimulus can comprise any one or more of a heat stimulus, a pain stimulus, a tactile or haptic stimulus (e.g. a vibration), an audio stimulus, a visual stimulus (e.g. any one or more of a light, a color, an image, a spray of droplets, or any other visual stimulus, or any combination of visual stimuli), or any other stimulus, or any combination of stimuli. In some heat stimulus embodiments, the heat or pain stimulus may be provided by way of a red or infra-red light beam. The red or infra-red light beam may, for example, be generated by a laser. In some embodiments, the red or infra-red light beam may be focused. In some audio stimulus embodiments, the audio stimulus may be provided by a speaker. In some visual stimulus embodiments, the visual stimulus may comprise a (e.g. short) flash of light, a flash of a picture (e.g. of a loved one, a funny picture, or any other picture). In some embodiments, the visual stimulus may be provided by way of a light emitting diode (LED), a light beam, or similar. In some embodiments comprising a light beam, the light beam may be focused. This can enhance the brightness of the visual stimulus, which can cause the magnitude of the reaction of the user 204 to increase. Although examples have been provided for the type of stimulus, it will be understood that any other type of stimulus or any combination of stimuli are also possible.

A field of view 206 of the user 204 is also illustrated in Fig. 2. In embodiments where the stimulus comprises a visual stimulus, a determination that the physiological characteristic signal is indicative of a reaction of the user 204 to the visual stimulus rendered by the device 202 means that the device 202 is in the field of view 206 of the user 204. On the other hand, a determination that the physiological characteristic signal is not indicative of a reaction of the user 204 to the visual stimulus rendered by the device 202 means that the device 202 is outside the field of view 206 of the user 204 (as illustrated in Fig. 2). In embodiments where the stimulus comprises an audio stimulus, a determination that the physiological characteristic signal is indicative of a reaction of the user 204 to the audio stimulus rendered by the device 202 means that the device 202 is in an audio range of the user 204 (that is, a range of the user 204 within which the user 204 can hear the audio stimulus). For example, a determination that the physiological characteristic signal is indicative of a reaction of the user 204 to the audio stimulus rendered by the device 202 can provide an indication that the user 204 is near to the device 202 that renders the stimulus or in the same environment (or space) as the device 202 that renders the stimulus. On the other hand, a determination that the physiological characteristic signal is not indicative of a reaction of the user 204 to the audio stimulus rendered by the device 202 means that the device 202 is outside the audio range of the user 204.

In embodiments where the stimulus comprises a heat or pain stimulus, a determination that the physiological characteristic signal is indicative of a reaction of the user 204 to a stimulus rendered by a device 202 means that the device 202 is in a range of the user 204 within which the heat or pain stimulus is detectable by the user 204 (e.g. can be felt by the user 204). On the other hand, a determination that the physiological characteristic signal is not indicative of a reaction of the user 204 to the heat or pain stimulus rendered by the device 202 means that the device 202 is outside the range of the user 204 within which the heat or pain stimulus is detectable by the user 204. In embodiments where the stimulus comprises a tactile or haptic stimulus, a determination that the physiological characteristic signal is indicative of a reaction of the user 204 to the tactile or haptic stimulus rendered by the device 202 means that the device 202 is in (e.g. direct or indirect) contact with the user 204. For example, the device 202 may be worn by the user 202 or close to the body of the user 202. On the other hand, a determination that the physiological characteristic signal is not indicative of a reaction of the user 204 to the tactile or haptic stimulus rendered by the device 202 means that the device 202 is not in (e.g. direct or indirect) contact with the user 204.

In some embodiments, the stimulus may be a conscious stimulus. That is, the stimulus may be a stimulus that can be perceived by the user 204, such that the user 204 is aware of the stimulus. In other embodiments, the stimulus may be a subliminal (or subconscious) stimulus. Thus, although the stimulus may suitable to cause a reaction of the user 204, the user 204 may themselves be unaware of the stimulus and/or their reaction to the stimulus according to some embodiments. For example, the stimulus may be below a threshold of sensation or consciousness according to some embodiments.

In some embodiments, the stimulus can comprise a sequence of stimuli. In some embodiments, a duration of the stimulus may be less than or equal to a threshold duration. The threshold duration may, for example, be 10 ms according to some embodiments. This can, for example, ensure that the stimulus is a subliminal (or subconscious) stimulus. In some embodiments, the device 202 can be configured to render the stimulus with an intensity that increases over time. In some embodiments, the stimulus may be rendered by the device 202 at predetermined time intervals.

In some embodiments, the device 202 can be configured to vary the type of stimulus rendered over time. For example, one or more properties of the stimulus may be varied over time, such as the duration and/or intensity (or amplitude) of the stimulus, or a different stimulus may be rendered over time (e.g. rendering a new picture each time). This can improve the reliability of the apparatus 100, since a habituation effect (where there is a decrease in a response to a stimulus following repeated exposure to it) can be reduced or prevented in this way. In some embodiments, the stimulus may comprise one or more pulses of stimulus. In some of these embodiments, each pulse may have different properties, e.g. any one or more of a different duration and a different intensity (or amplitude). In some embodiments, the device 202 can be configured to render a plurality of stimuli. In some of these embodiments, techniques may be employed to ensure that the plurality of stimuli do not interfere with each other. For example, the device 202 can be configured to employ time slot allocation (e.g. where the device 202 may be configured to allocate different stimuli to different time slots) or collision detection (e.g. where the device 202 may be configured to detect when two or more stimuli may interference with one another and take measures to avoid such interference, such as by time slot allocation).

In some embodiments, the stimulus may be coded with an identity of the device 202 that renders the stimulus. For example, the stimulus may be modulated in a manner that is specific to the device 202 that renders the stimulus. Thus, in some embodiments, different devices 202 that render a stimulus can be coded (e.g. modulated) in different ways. In this way, it can be possible for the processor 102 of the apparatus 100 to distinguish between different devices that render a stimulus in the analysis of the physiological characteristic signal. In some embodiments, the identity of the device 202 that renders the stimulus may be detectable in the physiological characteristic signal. In some visual stimulus embodiments, the stimulus may comprise different physical spaces (such as different rooms in a house) being illuminated with different colors, e.g. constantly or intermittently. In these embodiments, a calibration step may be performed that assigns a specific response in the physiological characteristic signal to a particular color.

Returning back to Fig. 2, as illustrated, the system 200 can also comprise the physiological characteristic sensor 104. Although the apparatus 100 and the physiological characteristic sensor 104 are illustrated as being different (that is, separate from one another) in the embodiment illustrated in Fig. 2, as mentioned earlier, it will be understood that the apparatus 100 may comprise the physiological characteristic sensor 104 according to other embodiments. In this illustrated example embodiment, the physiological characteristic sensor 104 is configured to be worn on a wrist of the body of the user 204. However, as described earlier, it will be understood that other locations for the physiological characteristic sensor 104 are also possible. In some embodiments, as illustrated in Fig. 2, the system 200 can further comprise one or more other devices 208, 210.

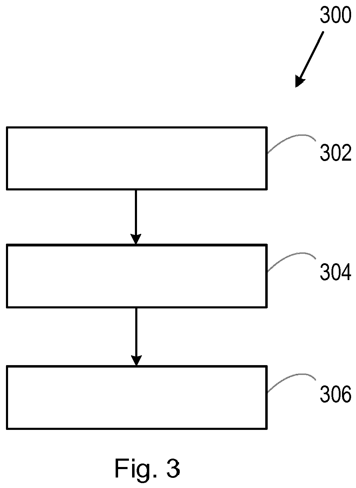

Fig. 3 illustrates a method 300 of operating the apparatus 100 described earlier for use with one or more devices 202, 208, 210 according to an embodiment. As described earlier, the apparatus 100 comprises a processor 102. The method 300 illustrated in Fig. 3 can generally be performed by or under the control of the processor 102. The method 300 will now be described with reference to Figs. 2 and 3.

At block 302 of Fig. 3, a physiological characteristic signal obtained from a user 204 is acquired from a physiological characteristic sensor 104. More specifically, the processor 102 of the apparatus 100 acquires the physiological characteristic signal from the physiological characteristic sensor 104. At block 304 of Fig. 3, the acquired physiological characteristic signal is analyzed to determine whether the physiological characteristic signal is indicative of a reaction of the user 204 to a stimulus rendered by a device 202. More specifically, the processor 102 of the apparatus 100 analyzes the acquired physiological characteristic signal to determine whether the physiological characteristic signal is indicative of a reaction of the user 204 to the stimulus rendered by the device 202.

As described in more detail earlier, in embodiments where the stimulus comprises a visual stimulus, a determination that the physiological characteristic signal is indicative of a reaction of the user 204 to the visual stimulus rendered by the device 202 means that the device 202 is in the field of view 206 of the user 204, whereas a determination that the physiological characteristic signal is not indicative of a reaction of the user 204 to the visual stimulus rendered by the device 202 means that the device 202 is outside the field of view 206 of the user 204. In embodiments where the stimulus comprises an audio stimulus, a determination that the physiological characteristic signal is indicative of a reaction of the user 204 to the audio stimulus rendered by the device 202 means that the device 202 is in an audio range of the user 204, whereas a determination that the physiological characteristic signal is not indicative of a reaction of the user 204 to the audio stimulus rendered by the device 202 means that the device 202 is outside the audio range of the user 204.

In embodiments where the stimulus comprises a heat or pain stimulus, a determination that the physiological characteristic signal is indicative of a reaction of the user 204 to a stimulus rendered by a device 202 means that the device 202 is in a range of the user 204 within which the heat or pain stimulus is detectable by the user 204, whereas a determination that the physiological characteristic signal is not indicative of a reaction of the user 204 to the heat or pain stimulus rendered by the device 202 means that the device 202 is outside the range of the user 204 within which the heat or pain stimulus is detectable by the user 204. In embodiments where the stimulus comprises a tactile or haptic stimulus, a determination that the physiological characteristic signal is indicative of a reaction of the user 204 to the tactile or haptic stimulus rendered by the device 202 means that the device 202 is in contact with the user 204, whereas a determination that the physiological characteristic signal is not indicative of a reaction of the user 204 to the tactile or haptic stimulus rendered by the device 202 means that the device 202 is not in contact with the user 204.

In some embodiments, the reaction of the user 204 to a stimulus rendered by a device 202 can be used to provide an indication of an attentional awareness of the user. For example, if a mild stimulus is unnoticed by the user, an indication may be provided that the attentional awareness of the user is low. This indication can, for example, be useful for automotive or operator use.

In some embodiments, the device 202 that renders the stimulus may be configured to transmit, to the physiological characteristic sensor 104, a request for the physiological characteristic sensor 104 to obtain the physiological characteristic signal from the user 204. According to some embodiments, the request may be transmitted via a communication channel, such as a wireless communication channel (e.g. using Bluetooth or WiFi). The request may be transmitted by the device 202 that renders the stimulus prior to rendering the stimulus, at the same time as rendering the stimulus, or after rendering the stimulus. Thus, in some embodiments, the device 202 may trigger the physiological characteristic sensor 104 to obtain the physiological characteristic signal from the user 204. In this way, the rendering of the stimuli and the obtaining of the physiological characteristic signal can be synchronized according to some embodiments. In some embodiments, the physiological characteristic sensor 104 may obtain the physiological characteristic signal from the user 204 in a time period that begins (e.g. immediately) prior to the rendering of the stimulus and ends (e.g. immediately) after rendering of the stimulus.

In some embodiments, the processor 102 of the apparatus 100 may be configured to determine whether the physiological characteristic signal is indicative of a reaction of the user 204 to the stimulus rendered by the device 202 by being configured to determine whether there is a change in the physiological characteristic signal, e.g. a change in the physiological characteristic signal between a point in time (e.g. immediately) prior to the device 202 rendering the stimulus and a point in time (e.g. immediately) after the device 202 renders the stimulus. In these embodiments, the processor 102 of the apparatus 100 may be configured to determine that the physiological characteristic signal is indicative of the reaction of the user 204 to the stimulus rendered by the device 202 where it is determined that there is a change in the physiological characteristic signal (or a change in the physiological characteristic signal that is greater than a threshold). Similarly, the processor 102 of the apparatus 100 may be configured to determine that the physiological characteristic signal is not indicative of the reaction of the user 204 to the stimulus rendered by the device 202 where it is determined that there is no change in the physiological characteristic signal (or a change in the physiological characteristic signal that is less than the threshold).

In some embodiments involving the threshold, the threshold may be personal to the user 204. For example, the threshold may be set based on the user 204. In this way, the apparatus 100 can be optimized to account for reactions that may vary between users. In some embodiments, each user may have a profile that outlines their expected reactions to different stimuli, such that the reactions can be recognized in the physiological characteristic signal when they occur. The profile may be adapted or learnt over time. In some embodiments, a user identification technique may be used to select a profile for the user 204.

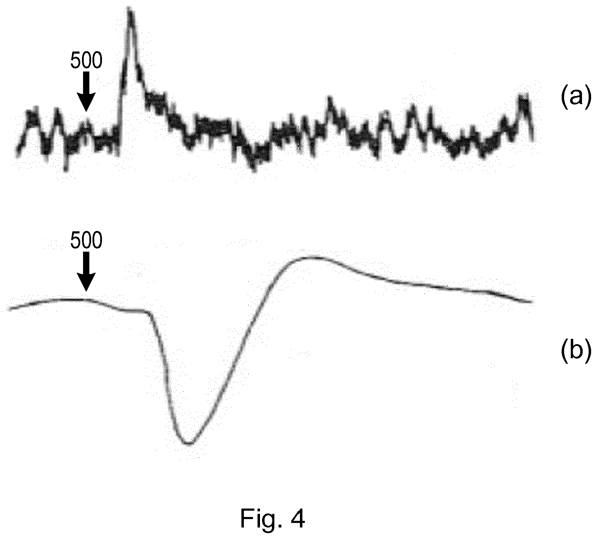

Figs. 4(a) and (b) illustrate example physiological characteristic signals that are indicative of a reaction of a user 204 to a stimulus rendered by a device 202 according to an embodiment. In more detail, Fig. 4(a) illustrates a sympathetic nervous system (SNS) signal acquired in a time period during which the stimulus 500 is rendered by the device 202 and Fig. 4(b) illustrates a skin resistance signal acquired during the time period during which the stimulus 500 is rendered by the device 202. As illustrated in Fig. 4(a), an increase in the sympathetic nervous system signal that is more than a predefined threshold is indicative of the reaction of the user 204 to the stimulus 500 rendered by the device 202. The predefined threshold in this example may, for example, be set based on an average increase in the sympathetic nervous system signal detected in the absence of the stimulus 500. As illustrated in Fig. 4(b), a decrease in the skin resistance signal that is more than a predefined threshold is indicative of the reaction of the user 204 to the stimulus 500 rendered by the device 202. The predefined threshold in this example may, for example, be set based on an average decrease in the skin resistance signal detected in the absence of the stimulus 500.

Returning back to Fig. 3, at block 306 of Fig. 3, a manner in which one or more devices 202, 208, 210 operate is controlled based on whether the user 204 reacted to the stimulus rendered by the device 202. More specifically, the processor 102 of the apparatus 100 controls the manner in which the one or more devices 202, 208, 210 operate based on whether the user 204 reacted to the stimulus rendered by the device 202. In some embodiments, the manner in which one or more devices 202, 208, 210 operate can comprise a manner in which one or more devices 202, 208 render information.

For example, the processor 102 of the apparatus 100 can be configured to control the device 202 to render visual information if the user 204 reacted to a visual stimulus rendered by the device 202. That is, the processor 102 of the apparatus 100 can be configured to control the device 202 that renders the visual stimulus to render visual information if the user 204 reacts to the visual stimulus rendered by that device 202. In this way, it can be ensured that the visual information rendered by the device 202 will be seen by the user 204.

On the other hand, the processor 102 can be configured to control the device 202 to render audio information if the user 204 failed to react to the visual stimulus rendered by the device 202. That is, the processor 102 can be configured to control the device 202 that renders the visual stimulus to render audio information if the user 204 fails to react to the visual stimulus rendered by that device 202. In this way, while the user 204 is unable to observe visual information rendered by the device 202 that renders the stimulus, it can be ensured that information rendered by that device 202 can still be communicated to the user by instead rendering the information as audio information.

Alternatively or in addition, the processor 102 can be configured to control one or more devices 208 that the user 204 is wearing or holding to render visual information if the user 204 failed to react to the visual stimulus rendered by the device 202. That is, the processor 102 can be configured to control one or more devices 208 other than the device 202 that renders the stimulus to render visual information if the user 204 fails to react to the visual stimulus rendered by the device 202 that renders the visual stimulus. As a device 208 that the user is wearing or holding is likely to be in the field of view 206 of the user 204, the chance of the visual information being successfully communicated to the user 204 can be improved.

Alternatively or in addition, the processor 102 can be configured to control one or more devices 210 in the field of view 206 of the user 204 to render visual information if the user 204 failed to react to the visual stimulus rendered by the device 202. That is, the processor 102 can be configured to control one or more devices 210 other than the device 202 that renders the stimulus to render visual information if the user 204 fails to react to the visual stimulus rendered by the device 202 that renders the visual stimulus. As the one or more devices 210 that are controlled to render the visual information are in the field of view 206 of the user 204, it can be ensured that the visual information can still be communicated to the user 204 even when the user 204 is unable to observe visual information rendered by the device 202 that rendered the visual stimulus. In some embodiments, each of the one or more devices 210 may comprise a proximity sensor, which can acquire information on the proximity of the user 204 to the device 210 for use in selecting which of the one or more devices 210 to control to render the visual information.

Although an example has been described with regard to an embodiment in which a visual stimulus is rendered by the device 202, it will be understood that similar examples also apply to any of the other types of stimulus mentioned earlier.

Although not illustrated in Fig. 3, in some embodiments, the processor 102 of the apparatus 100 may be configured to, if the physiological characteristic signal is indicative of a reaction of the user 204 to a stimulus rendered by a device 202 (at block 304 of Fig. 3), analyze the acquired physiological characteristic signal to determine an intensity of the stimulus. For example, a change in the acquired physiological characteristic signal may be proportional to the perceived light intensity. In some embodiments, the determined intensity of the stimulus may be indicative of a location of the device 202 with respect to the user 204 (e.g. with respect to a center of the field of view 206 of the user 204 according to embodiments involving a visual stimulus). For example, the higher the determined intensity of the stimulus, the closer the device 202 may be to the user 204 (e.g. to the center of the field of view 206 of the user 204 according to embodiments involving a visual stimulus, rather than in the peripheral vision of the user 204). Similarly, for example, the lower the determined intensity of the stimulus, the further the device 202 may be from the user 204 (e.g. from the center of the field of view 206 of the user 204 according to embodiments involving a visual stimulus).

Alternatively or in addition, in some embodiments, the determined intensity of the stimulus may be indicative of a distance of the user 204 from the device 202. In some embodiments where the device 202 is configured to render the stimulus with an intensity that increases over time, a point at which the physiological characteristic signal is indicative of the reaction of the user 204 to the stimulus may be indicative of a distance of the user 204 from the device 202 that renders the stimulus.

Although not illustrated in Fig. 3, in some embodiments where the stimulus rendered by the device 202 comprises a visual stimulus, the processor 102 of the apparatus 100 may be configured to analyze the acquired physiological characteristic signal to determine whether the user 204 is facing or partially facing the device 202. For example, this determination may be based on the determined location of the device 202 with respect to a center of the field of view 206 of the user 204. In embodiments where the physiological characteristic signal comprises a brain activity (e.g. an EEG) sensor, the processor 102 of the apparatus 100 may be configured to analyze the acquired brain activity signal to determine if a visual stimulus is received by a left eye of the user 204, a right of the user 204, or both eyes of the user 204.

Although also not illustrated in Fig. 3, in some embodiments, the processor 102 of the apparatus 100 may be configured to, if the physiological characteristic signal is indicative of a reaction of the user 204 to a stimulus rendered by a device 202, analyze the acquired physiological characteristic signal to determine a property of the stimulus. In some of these embodiments, the property of the stimulus may be indicative of a location of the user 204 in an environment. In embodiments where the stimulus comprises different physical spaces illuminated with different colors and if the physiological characteristic signal is indicative of a reaction of the user 204 to a stimulus rendered by a device 202, the processor 102 of the apparatus 100 may be configured to analyze the acquired physiological characteristic signal to determine in which physical space the user 204 is present, e.g. based on the specific responses previously assigned to a particular color in a calibration step.

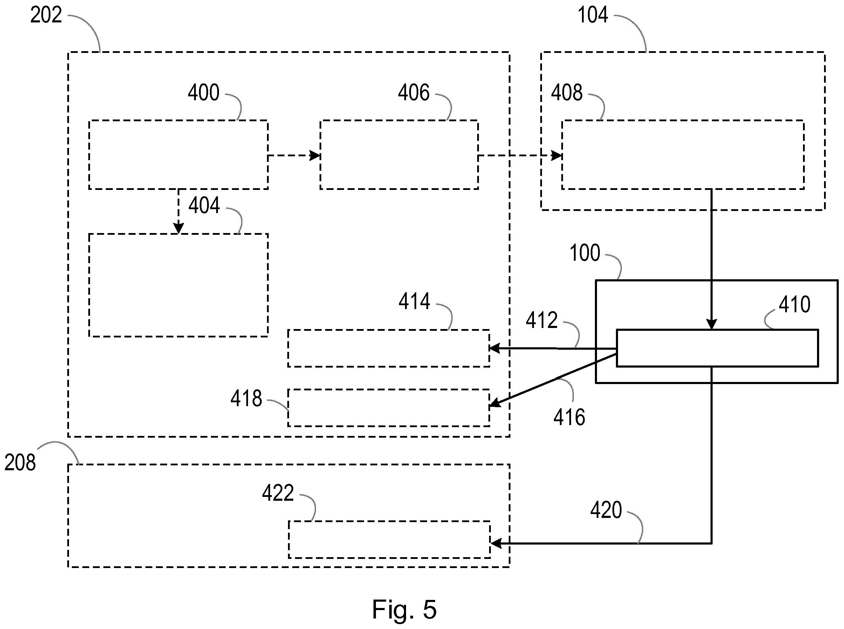

Fig. 5 illustrates an example of the method 300 of Fig. 3 performed in the system 200 of Fig. 2 according to an embodiment. At block 400 of the example embodiment illustrated in Fig. 5, the device 202 configured to render the stimulus may need to communicate information to the user 204. At block 404 of the example embodiment illustrated in Fig. 5, the device 202 may render a stimulus, e.g. in any of the manners described earlier. At block 406 of the example embodiment illustrated in Fig. 5, the device 202 that renders the stimulus may transmit, to the physiological characteristic sensor 104, a request for the physiological characteristic sensor 104 to obtain the physiological characteristic signal from the user 204. As described earlier, this request may be transmitted by the device 202 that renders the stimulus prior to rendering the stimulus, at the same time as rendering the stimulus, or after rendering the stimulus. At block 408 of the example embodiment illustrated in Fig. 5, the physiological characteristic sensor 104 may obtain a physiological characteristic signal from the user 204.

At block 410 of the example embodiment illustrated in Fig. 5, the method 300 described earlier with reference to Fig. 3 is performed by the apparatus 100 or, more specifically, by the processor 102 of the apparatus 100. That is, at block 410 of Fig. 5, as described in more detail earlier with reference to Fig. 3, the processor 102 of the apparatus 100 acquires the physiological characteristic signal from the physiological characteristic sensor 104 (block 302 of Fig. 3), analyzes the acquired physiological characteristic signal to determine whether the physiological characteristic signal is indicative of a reaction of the user 204 to the stimulus rendered by the device 202 (block 304 of Fig. 3), and controls a manner in which one or more devices 202, 208, 210 operate based on whether the user 204 reacted to the stimulus rendered by the device 202 (block 306 of Fig. 3).

Considering a visual stimulus, in the example embodiment illustrated in Fig. 5, if the user 204 reacts to the visual stimulus rendered by the device 202 (as illustrated by arrow 412 in Fig. 5), at block 414 of the example embodiment illustrated in Fig. 5, the processor 102 of the apparatus 100 may control the device 202 that renders the stimulus to render visual information. Alternatively, if the user 204 fails to react to the visual stimulus rendered by the device 202 (as illustrated by arrow 416 in Fig. 5), at block 418 of the example embodiment illustrated in Fig. 5, the processor 102 of the apparatus 100 may control the device 202 that renders the stimulus to render audio information. Alternatively or in addition, if the user 204 fails to react to the visual stimulus rendered by the device 202 (as illustrated by arrow 420 in Fig. 5), at block 422 of the example embodiment illustrated in Fig. 5, the processor 102 of the apparatus 100 may control one or more other devices to render visual information, such as one or more devices 208 that the user 204 is wearing or holding (as illustrated in Fig. 5) and/or one or more devices in the field of view 206 of the user 204 to render visual information (not illustrated in Fig. 5).

Although not illustrated in Figs. 3 or 5, in some embodiments, the processor 102 of the apparatus 100 may be configured to output information or feedback to the user 204. This information or feedback may, for example, depend on the reaction of the user indicated in the physiological characteristic signal. For example, a brightness of a light may be adapted (e.g. to facilitate reading and/or attract the attention of the user 204), visual notifications or information may be provided via or at least supported by audio, information may be routed to a wearable device or another device that is within the peripheral vision of the user, or similar. In some embodiments, the processor 102 of the apparatus 100 may be configured to detect whether the user 204 is looking at (e.g. a screen of) the device 202. If it is detected that the user 204 is no longer looking at the device 202, the processor 102 of the apparatus 100 may be configured to determine that the user 204 has closed their eyes and/or fallen asleep. For example, this may be useful in detecting whether a user has fallen asleep while watching television or has closed their eyes or is falling asleep in a car at night (e.g. where there is no reaction to street lights anymore).

In addition to the apparatus 100 and method 300 described earlier, there is also provided a computer program product comprising a computer readable medium. The computer readable medium has computer readable code embodied therein. The computer readable code is configured such that, on execution by a suitable computer or processor, the computer or processor is caused to perform the method described herein. The computer readable medium may be, for example, any entity or device capable of carrying the computer program product. For example, the computer readable medium may include a data storage, such as a ROM (such as a CD-ROM or a semiconductor ROM) or a magnetic recording medium (such as a hard disk). Furthermore, the computer readable medium may be a transmissible carrier, such as an electric or optical signal, which may be conveyed via electric or optical cable or by radio or other means. When the computer program product is embodied in such a signal, the computer readable medium may be constituted by such a cable or other device or means. Alternatively, the computer readable medium may be an integrated circuit in which the computer program product is embedded, the integrated circuit being adapted to perform, or used in the performance of, the method described herein.

There is thus provided herein an improved apparatus 100, system 200, method 300 and computer program product.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An apparatus (100) for use with one or more devices (202, 208, 210), the apparatus (100) comprising a processor (102) configured to:
acquire, from a physiological characteristic sensor (104), a physiological characteristic signal obtained from a user (204);
analyze the acquired physiological characteristic signal to determine whether the physiological characteristic signal is indicative of a reaction of the user (204) to a stimulus rendered by a device (202);and
control a manner in which one or more devices (202, 208, 210) operate based on whether the user (204) reacted to the stimulus rendered by the device (202).

2. The apparatus (100) as claimed in claim 1, wherein the processor (102) is configured to:
if the physiological characteristic signal is indicative of a reaction of the user (204) to a stimulus rendered by a device (202), analyze the acquired physiological characteristic signal to determine an intensity of the stimulus,
wherein the determined intensity of the stimulus is indicative of a location of the device (202) with respect to the user (204).

3. The apparatus (100) as claimed in claim 2, wherein:
the higher the determined intensity of the stimulus, the closer the device (202) is to the user (204); and
the lower the determined intensity of the stimulus, the further the device (202) is from the user (204).

4. The apparatus (100) as claimed in any of the preceding claims, wherein the processor (102) is configured to:
if the physiological characteristic signal is indicative of a reaction of the user (204) to a stimulus rendered by a device (202), analyze the acquired physiological characteristic signal to determine an intensity of the stimulus,
wherein the determined intensity of the stimulus is indicative of a distance of the user (204) from the device (202).

5. The apparatus (100) as claimed in any of the preceding claims, wherein the stimulus rendered by the device (202) comprises a visual stimulus and the processor (102) is configured to:
analyze the acquired physiological characteristic signal to determine whether the user (204) is facing or partially facing the device (202).

6. The apparatus (100) as claimed in any of the preceding claims, wherein the processor (102) is configured to:
if the physiological characteristic signal is indicative of a reaction of the user (204) to a stimulus rendered by a device (202), analyze the acquired physiological characteristic signal to determine a property of the stimulus,
wherein the property of the stimulus is indicative of a location of the user (204) in an environment.

7. The apparatus (100) as claimed in any of the preceding claims, wherein the manner in which one or more devices (202, 208, 210) operate comprises a manner in which one or more devices (202, 208, 210) render information.

8. The apparatus (100) as claimed in claim 7, wherein the stimulus rendered by the device (202) comprises a visual stimulus and the processor (102) is configured to:
if the user (204) reacted to the visual stimulus rendered by the device (202), control the device (202) to render visual information; and/or
if the user (204) failed to react to the visual stimulus rendered by the device (202), control the device (202) to render audio information, control one or more devices (208) that the user (204) is wearing or holding to render visual information, or control one or more devices (210) in a field of view (206) of the user (204) to render visual information.

9. The apparatus (100) as claimed in any of the preceding claims, wherein the stimulus is a subliminal stimulus.

10. The apparatus (100) as claimed in any of the preceding claims, wherein a duration of the stimulus is less than or equal to 10 ms.

11. The apparatus (100) as claimed in any of the preceding claims, wherein the stimulus is coded with an identity of the device (202).

12. A system (200) comprising:
the apparatus (100) as claimed in any of claims 1 to 11; and
the device (202) configured to render the stimulus.

13. The system (200) as claimed in claim 12, wherein the device (202) is configured to:
transmit, to the physiological characteristic sensor (104), a request for the physiological characteristic sensor (104) to obtain the physiological characteristic signal from the user (204) prior to rendering the stimulus, at the same time as rendering the stimulus, or after rendering the stimulus.

14. A method (300) of operating an apparatus (100) for use with one or more devices (202), the method (300) comprising:
acquiring (302), from a physiological characteristic sensor (104), a physiological characteristic signal obtained from a user (204);
analyzing (304) the acquired physiological characteristic signal to determine whether the physiological characteristic signal is indicative of a reaction of the user (204) to a stimulus rendered by a device (202); and
controlling (308) a manner in which one or more devices (202, 208, 210) operate based on whether the user (204) reacted to the stimulus rendered by the device (202).

15. A computer program product comprising a computer readable medium, the computer readable medium having computer readable code embodied therein, the computer readable code being configured such that, on execution by a suitable computer or processor, the computer or processor is caused to perform the method as claimed in claim 14.
